# FASCICULE DE BREVET EUROPEEN

(11) **EP 2 213 212 B1**
(45) Date de publication et mention de la délivrance du brevet: **21.09.2011**
(21) Numéro de dépôt: 09306216.4
(22) Date de dépôt: 11.12.2009
(51) Int. Cl.: A47J 36/24, B67D 1/14

(54) **Dispositif de réchauffage d'aliments pour enfants en bas âge**
Vorrichtung zum Aufwärmen von Lebensmitteln für Kleinkinder
Device for reheating food for young children

(30) Priorité: 30.01.2009 FR 0950570
(43) Date de publication de la demande: 04.08.2010
(73) Titulaire: BEABA, 01100 Groissiat (FR)
(72) Inventeur: Vulliermet, Jean-Paul, 69007 Lyon (FR)
(74) Mandataire: Vuillermoz, Bruno

(56) Documents cités:
- EP-A- 0 861 801
- WO-A-99/15056
- GB-A- 2 283 299
- US-A- 4 133 456
- US-A- 5 797 313

## Description

### DOMAINE DE L'INVENTION

L'invention a trait aux appareils ménagers de réchauffage d'aliments pour enfants en bas âge, et notamment de petits pots, outre de chauffage de l'eau pour la préparation de biberons.

### ETAT DE LA TECHNIQUE

Un chauffe-biberon comprend usuellement une enceinte, apte à recevoir un biberon préalablement rempli totalement ou partiellement d'eau, ladite enceinte étant muni d'un organe de chauffage, notamment par le biais de résistances électriques. On connaît cependant l'efficacité limité d'un tel dispositif, dans la mesure où, en raison des pertes thermiques, la durée nécessaire pour aboutir à la température souhaitée est relativement longue.

Le document WO-99/15056 décrit un dispositif de réchauffage d'aliments pour enfants.

De fait, on a proposé un dispositif comprenant un réservoir apte à recevoir de l'eau, intégrant un élément pour chauffer l'eau qu'il contient, et un logement prévu sous le réservoir pour recevoir un biberon. Un passage permettant à l'eau de circuler entre le réservoir et le logement est ménagé, ce passage étant libéré à l'aide d'un mécanisme approprié. Par gravité, l'eau chauffée contenue dans le réservoir passe alors dans le biberon, dans lequel est versé du lait en poudre afin de constituer l'aliment. Par ailleurs, ce dispositif comprend un système pour permettre l'écoulement de l'eau dans le biberon reçu dans le logement précité.

Toutefois, le problème de pose de garantir une étanchéité satisfaisante pour l'écoulement de l'eau, problème non résolu à ce jour.

Par ailleurs, on ne connaît pas de dispositif du type en question, permettant d'assurer simultanément le réchauffage d'un petit pot, et le chauffage direct de l'eau pour la réalisation d'un biberon.

L'objectif de l'invention est de proposer un tel dispositif, satisfaisant à ces besoins.

### EXPOSE DE L'INVENTION

Le but de la présente invention est tout d'abord de proposer un mécanisme d'obturation du récipient recevant l'eau devant être chauffée assurant une bonne étanchéité entre ledit récipient et le biberon reçu dans un logement sous-jacent.

A cet effet, l'invention a pour objet un dispositif de réchauffage d'aliments ou de constituants d'aliments pour enfants en bas âge, comprenant :
■ un réservoir apte à recevoir de l'eau, muni d'un élément chauffant pour chauffer l'eau qu'il contient,
■ un logement pour biberon agencé sous le réservoir, le réservoir comportant une ouverture pour le passage de l'eau par gravité en direction du logement pour biberon,
■ et un mécanisme d'obturation de ladite ouverture actionné par mécanisme à levier.

Selon l'invention :
■ le mécanisme d'obturation comporte :
   - une pièce cylindrique creuse munie d'ouvertures latérales et d'un téton agencé sur son sommet et comprenant une gorge ;
   - un joint torique agencé dans la gorge du téton ;
   - un ressort de rappel disposé à la périphérie de la pièce cylindrique et apte à forcer le joint torique sur la surface de l'ouverture dont est muni le réservoir pour fermer hermétiquement celui-ci.
■ le mécanisme d'obturation comprend un levier articulé sur le corps du dispositif, apte lorsqu'il est actionné, à translater la pièce cylindrique pour libérer l'ouverture et comprimer le ressort de rappel.

En d'autres termes, l'obturation de l'ouverture du réservoir est réalisée par compression d'un joint sur la surface de celle-ci. La compression du joint n'induit donc pas de frottement, ce qui préserve sa durée de vie et facilite l'actionnement du mécanisme d'obturation.

Selon des modes de réalisations particuliers de l'invention, le dispositif de réchauffage d'aliments ou de constituants d'aliments pour enfants en bas âge comporte une ou plusieurs des caractéristiques suivantes.

Le mécanisme à levier comporte :
■ un premier bras mobile en rotation par rapport au bâti ou corps du dispositif, apte à être actionné par appui sur l'une de ses extrémités et comprenant un doigt ménagé au niveau de son autre extrémité ; et
■ un second bras mobile en rotation par rapport au bâti ou corps du dispositif, prenant appui sur le doigt du premier bras à une première extrémité et comprenant une fourche à sa seconde extrémité, ladite fourche étant engagée dans une gorge de la pièce cylindrique.

Le mécanisme d'obturation comporte en outre une chambre cylindrique dans laquelle est disposée la pièce cylindrique, ladite pièce comprenant une gorge dans laquelle est inséré un joint torique de diamètre extérieur sensiblement égal au diamètre intérieur de la chambre.

Le réservoir, le mécanisme d'obturation et le mécanisme à levier forment un bloc amovible, susceptible d'être escamoté hors du dispositif de l'invention.

L'élément chauffant est un film mince résistif disposé sur le fond du réservoir.

Le dispositif comporte en outre avantageusement un réceptacle encliquetable sur le bâti ou corps dudit dispositif, et apte à recevoir un ou plusieurs biberons, en vue de leur stérilisation au sein d'un four à micro-ondes.

### BREVE DESCRIPTION DES FIGURES

L'invention sera mieux comprise à la lecture de la description qui va suivre, donnée uniquement à titre d'exemple, et réalisée en relation avec les dessins annexés, dans lesquels des références identiques désignent des éléments identiques ou analogues, et dans lesquels :
- la figure 1 est une représentation schématique en perspective du dispositif conforme à l'invention ;
- la figure 2 est une représentation schématique en perspective du dispositif de la figure 1, faisant apparaître le caractère amovible du réservoir d'eau dont il est muni ;

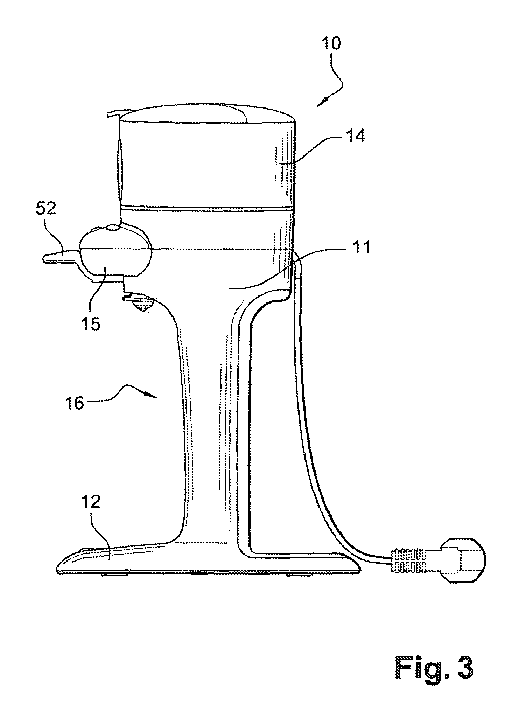

- la figure 3 est une vue de côté du dispositif de la figure 1, dans laquelle a été escamoté le réceptacle propre à recevoir le ou les biberons en vue de leur stérilisation ;

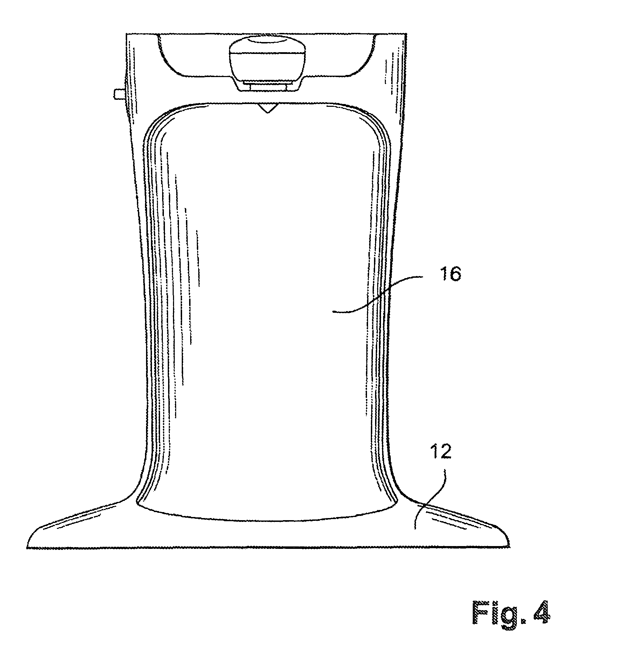

- la figure 4 est une représentation schématique vue de face du dispositif de la figure 1 du seul corps ou bâti ;
- la figure 5 est une représentation schématique illustrant le principe de fonctionnement du mécanisme d'obturation dudit récipient.

### DESCRIPTION DETAILLEE DE L'INVENTION

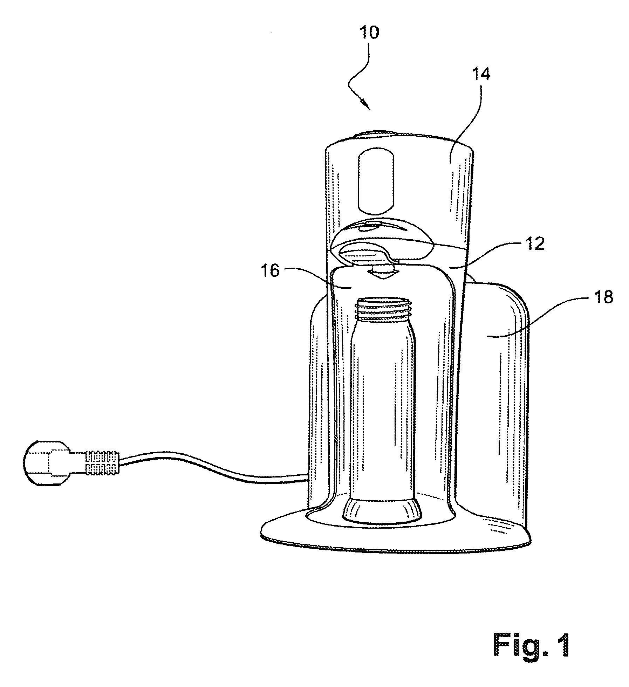

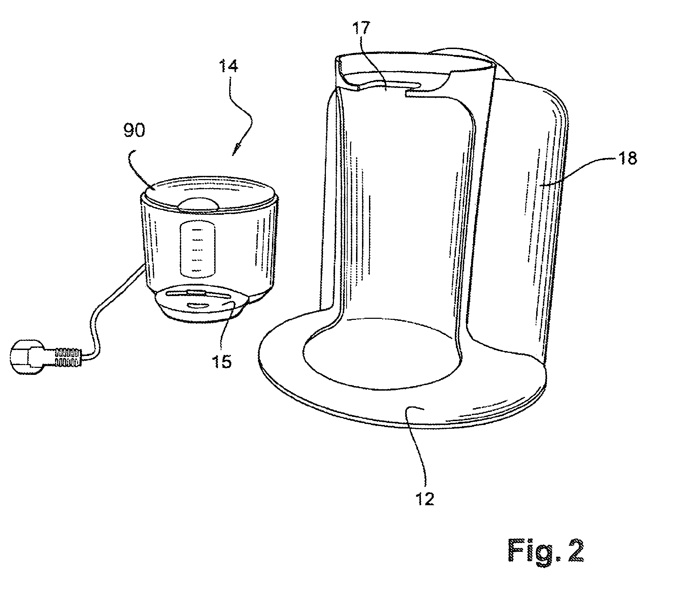

Le dispositif conforme à l'invention est représenté au sein des figures 1 et 2. Ce dispositif **10** comprend un corps ou bâti **11,** reposant au moyen d'une base **12** sur toute surface plane, et par exemple une table. Le corps ou bâti **11** reçoit en sa partie supérieure un réservoir d'eau **14** équipé d'un élément chauffant. Le corps ou bâti **11** présente par ailleurs un évidement **16** formant un logement pour recevoir un biberon. Cet évidement est donc de taille suffisamment importante, pour permettre d'y loger un biberon de taille, et notamment de hauteur standard.

Le dispositif de l'invention comporte également avantageusement un réceptacle **18,** encliquetable au niveau de sa partie postérieure, et susceptible de recevoir un ou plusieurs biberons en vue de leur stérilisation au sein d'un four à micro-ondes. Ce réceptacle est donc réalisé en matière plastique, et est également de taille suffisante pour permettre d'y loger trois à quatre biberons de taille standard.

De manière avantageuse, le réservoir **14** est amovible, comme cela est visible sur la figure 2 notamment. A cet effet, il présente une base inférieure principalement plane, afin d'assurer une certaine stabilité lorsqu'il n'est pas positionné sur le corps ou bâti **11** du dispositif de l'invention. En outre, la périphérie de cette base inférieure présente une forme courbe, complémentaire du profil conféré à l'extrémité supérieure du corps ou bâti **11.** Par ailleurs, il présente une saillie **15,** pourvue de boutons de réglage et venant s'encastrer dans un évidement **17** ménagé au niveau de l'extrémité supérieure du corps ou bâti **11.** Lesdits boutons de réglage remplissent plusieurs fonctions, et notamment le réglage de la température de l'eau contenue dans le réservoir, selon qu'elle est destinée à l'eau du biberon (température alors voisine de 37 °C), à permettre le fonctionnement du réservoir en mode bain marie, pour le réchauffage des petits pots (température alors plus élevée), ou encore, à haute température, en vue du nettoyage dudit réservoir.

Les fils d'alimentation électrique propres à alimenter l'organe de chauffage du récipient **14** desservent directement celui-ci.

Le récipient **14** comporte un couvercle **90,** articulé sur sa périphérique, et ouvrable par l'utilisateur pour d'une part, permettre son remplissage avec de l'eau, et d'autre part, lorsque ledit réservoir remplit la fonction de réchauffage de petit pot, de positionner celui-ci dans l'eau. Ainsi, le réservoir peut servir seul pour chauffer par exemple les petits pots de bébé en plongeant ceux-ci dans l'eau chaude une fois le couvercle **90** ouvert. Mais il a également pour vocation de chauffer de l'eau en vue de la préparation d'un biberon.

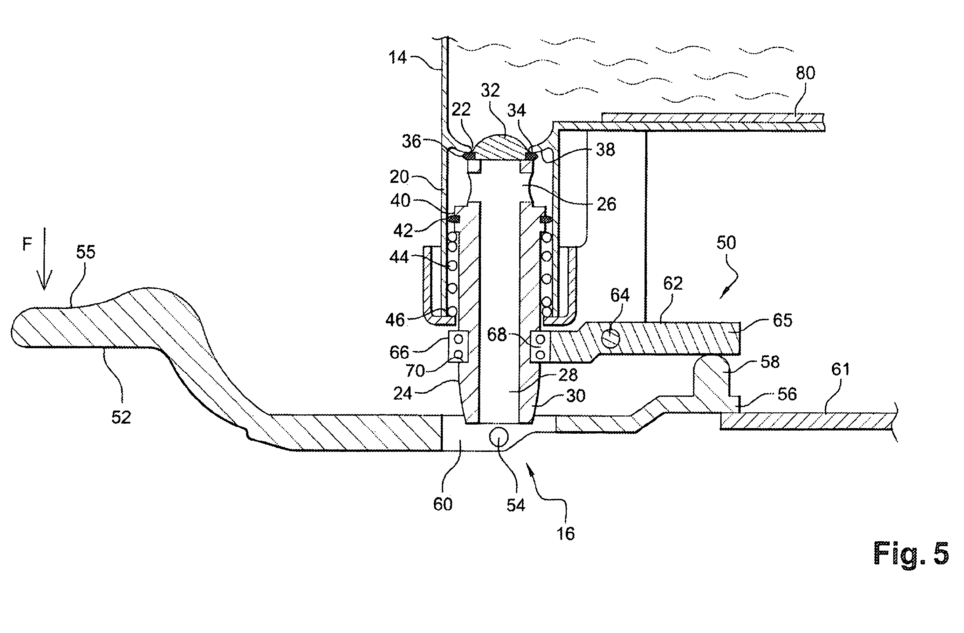

De préférence, le fond du réservoir **14** est équipé d'un film mince résistif **80** (voir figure 5), tel que par exemple un film mince, ce qui permet un chauffage de l'eau homogène et sur une grande surface, et de fait rapide. La température de l'eau est contrôlée par un capteur de température monté au dos du système de chauffage (film mince).

La figure 5 est une vue en section illustrant de manière simplifiée les principaux éléments d'un mécanisme d'obturation permettant la circulation de l'eau présente dans le réservoir **14** en direction du logement pour biberon **16.**

Le réservoir **14** comporte sur son fond un prolongement ou chambre cylindrique **20** dans laquelle est aménagée une ouverture circulaire **22.**

Une pièce cylindrique creuse **24** est par ailleurs montée mobile en translation dans le prolongement cylindrique **20.** La pièce **24** comporte :
■ des ouvertures latérales **26,** ménagées au voisinage de son extrémité supérieure, et débouchant sur un canal central **28** ouvert au niveau de l'extrémité inférieure **30** de la pièce **24 ;**
■ un téton conique **32** faisant saillie sur le sommet de la pièce **24,** le téton **32** comportant une gorge circulaire **34** dans laquelle est inséré un joint torique **36.** En position haute de la pièce **24** au sein de la chambre cylindrique **20,** le joint torique **36** coopère avec la surface inférieure **38** de l'ouverture **22,** fermant de fait hermétiquement celle-ci de sorte que l'eau contenue dans le réservoir **14** ne peut s'écouler vers le logement pour biberon **16 ;**
■ une saillie annulaire **40,** au sein de laquelle est définie une gorge annulaire recevant un joint torique **42** de diamètre extérieur sensiblement égal au diamètre interne de la chambre cylindrique **20** afin de rendre étanche la partie basse de ladite chambre cylindrique **20 ;** et
■ un ressort de rappel **44** monté à la périphérie de la pièce **24,** et prenant respectivement appui sous la saillie annulaire **40** et sur une surface annulaire inférieure **46,** s'étendant depuis la chambre cylindrique **20.** Le ressort de rappel **44** exerce, par défaut, c'est-à-dire en l'absence de contrainte extérieure, une force sur la pièce **24** de manière à maintenir le joint 36 contre la surface **38** de l'ouverture **22** et donc fermer hermétiquement celle-ci.

La pièce **24** est par ailleurs mise en mouvement dans la chambre cylindrique 20 par un mécanisme à levier **50.** Ce mécanisme comporte :
■ un premier bras **52** articulé autour d'un axe **54** solidaire du corps ou bâti **11,** actionnable au niveau de l'une de ses extrémités **55** par l'utilisateur ; le bras **52** comprend à son autre extrémité **56** un doigt **58,** dirigé vers le haut. Le premier bras **52** comprend également un alésage **60,** apte à autoriser le passage de la pièce **24** lorsque celle-ci descend. La course du bras **52** est par ailleurs limitée par une butée **61** émanant du corps **11,** empêchant l'extrémité **56** de descendre en dessous d'un seuil déterminé par construction ;
■ un second bras **62,** articulé autour d'un axe **64** solidaire du corps ou bâti **11** et parallèle à l'axe de rotation **54,** dont l'une des extrémités **65** coopère avec le doigt **58** du premier bras **52,** et dont l'autre extrémité **66** forme une fourche **68** reçue dans une gorge annulaire **70** ménagée en zone sensiblement inférieure de la pièce **24.**

En fonctionnement, l'utilisateur appuie sur l'extrémité **55** dudit premier bras **52** dans le sens de la flèche **F**. Le premier bras **52** tourne ainsi autour de son axe **54,** induisant de fait l'ascension du doigt 58, qui à son tour fait basculer le second bras **62** autour de son axe **64.** La fourche **66** du second bras **62** translate ainsi la pièce **24** vers le bas. De ce fait, le joint torique **36** n'est plus en contact avec la surface **38** de l'ouverture **22,** de sorte que l'eau contenue dans le réservoir **14** s'écoule par les ouvertures latérales **26** de la pièce **24,** puis à l'intérieur du canal **28** et donc en direction du logement pour biberon **16,** au niveau duquel a été préalablement placé un biberon.

Par ailleurs, la translation de la pièce **24** vers le bas a pour effet de comprimer le ressort de rappel **44.** Lorsque l'utilisateur relâche l'extrémité **55** du premier bras **52,** le ressort **44** rappelle donc la pièce **24** vers le haut de manière à fermer hermétiquement l'ouverture **22.**

Le dispositif selon l'invention permet ainsi de préparer les repas d'un enfant depuis les biberons jusqu'aux petits pots à l'aide d'un appareil ménager compact, simple à mettre en oeuvre, et de réalisation aisée.

## Revendications

1. Dispositif de réchauffage d'aliments ou de constituants d'aliments pour enfants en bas âge (10) comprenant :
■ un réservoir (14) apte à recevoir de l'eau, muni d'un élément chauffant (80) pour chauffer l'eau qu'il contient,
■ un logement (16) pour biberon agencé sous le réservoir (14), le réservoir comportant une ouverture (22) pour le passage de l'eau par gravité en direction du logement (16) pour biberon,
■ et un mécanisme d'obturation (24, 38, 44) de ladite ouverture actionné par mécanisme à levier (52, 62),
***caractérisé* en ce que**
■ le mécanisme d'obturation comporte:
• une pièce cylindrique creuse (24) munie d'ouvertures latérales (26) et d'un téton (32) agencé sur son sommet et comprenant une gorge (34) ;
• un joint torique (36) agencé dans la gorge du téton ;
• un ressort de rappel (44) disposé à la périphérie de la pièce cylindrique creuse (24) et apte à forcer le joint torique (36) contre la surface (38) de l'ouverture (22) dont est muni le réservoir (14) pour fermer hermétiquement celui-ci ;
■ le dispositif de réchauffage comprend un levier (52) articulé sur le corps (11) du dispositif, apte lorsqu'il est actionné, à translater la pièce cylindrique creuse (24) pour libérer l'ouverture (22) du réservoir (14) et comprimer le ressort de rappel (44).

2. Dispositif de réchauffage selon la revendication 1, ***caractérisé* en ce que** le mécanisme à levier (52, 62) comporte :
■ un premier bras (52) articulé autour d'un axe (54) solidaire du corps ou bâti (11), actionnable au niveau de l'une de ses extrémités (55) par l'utilisateur, ledit bras (52) comprenant :
• à son autre extrémité (56) un doigt (58), dirigé vers le haut ;
• un alésage (60), apte à autoriser le passage de la pièce cylindrique creuse (24) lorsque celle-ci se translate ;
■ un second bras (62), articulé autour d'un axe (64) solidaire du corps ou bâti (11) et parallèle à l'axe de rotation (54), dont l'une des extrémités (65) coopère avec le doigt (58) du premier bras (52), et dont l'autre extrémité (66) forme une fourche (68) reçue dans une gorge annulaire (70) ménagée en zone sensiblement inférieure de la pièce cylindrique creuse (24).

3. Dispositif de réchauffage selon l'une des revendications 1 et 2, ***caractérisé* en ce que** le mécanisme d'obturation comporte en outre une chambre cylindrique (20) dans laquelle est susceptible de se déplacer la pièce cylindrique creuse (24), ladite pièce (24) comprenant une saillie annulaire (40) définissant une gorge, dans laquelle est inséré un joint torique (42) de diamètre extérieur sensiblement égal au diamètre intérieur de la chambre cylindrique (20).

4. Dispositif de réchauffage selon l'une des revendications 1 à 3, ***caractérisé* en ce que** le réservoir, le mécanisme d'obturation et le mécanisme à levier forment un bloc amovible.

5. Dispositif de réchauffage selon l'une des revendications 1 à 4, ***caractérisé* en ce que** l'élément chauffant (80) est constitué d'un film mince résistif disposé sur le fond du réservoir (14).

6. Dispositif de réchauffage selon l'une des revendications 1 à 5, ***caractérisé* en ce qu'**il comprend également un réceptacle (18) encliquetable sur le bâti ou corps (11) dudit dispositif, et apte à recevoir un ou plusieurs biberons, en vue de leur stérilisation au sein d'un four à micro-ondes.

## Claims

1. Device for reheating food or food constituents for young children (10) including:
■ a reservoir (14) capable of receiving water, provided with a heating element (80) for heating the water it contains,
■ a housing (16) for a feeding bottle arranged under the reservoir (14), the reservoir comprising an opening (22) for water to pass through by gravity in the direction of the feeding bottle housing (16),
■ and a mechanism (24, 38, 44) for plugging said opening activated by a lever mechanism (52, 62),
***characterized* in that**
■ the plugging mechanism comprises:
■ a hollow cylindrical part (24) provided with side openings (26) and a nipple (32) arranged at the top thereof and including a groove (34);
■ an O-ring (36) arranged in the groove of the nipple;
■ a return spring (44) placed on the periphery of the hollow cylindrical part (24) and capable of forcing the O-ring (36) against the surface (38) of the opening (22) with which the reservoir (14) is provided in order to hermetically close it;
■ the reheating device includes a lever (52) articulated on the body (11) of the device, capable, when it is activated, of moving the hollow cylindrical part (24) in order to release the opening (22) of the reservoir (14) and compress the return spring (44).

2. Reheating device as claimed in claim 1, ***characterized* in that** the lever mechanism (52, 62) comprises:
■ a first arm (52) articulated around an axis (54) secured to the body or structure (11), and that can be activated at one of its ends (55) by the user, said arm (52) including:
■ at its other end (56) a finger (58), pointing upwards;
■ a bore (60), capable of affording passage to the hollow cylindrical part (24) when it moves;
■ a second arm (62) articulated around an axis (64) secured to the body or structure (11) and parallel to the axis of rotation (54), whereof one of the ends (65) engages with the finger (58) of the first arm (52), and whereof the other end (66) forms a fork (68) received in an annular groove (70) provided in a substantially lower area of the hollow cylindrical part (24).

3. Reheating device as claimed in one of claims 1 and 2, ***characterized* in that** the plugging mechanism further comprises a cylindrical chamber (20) in which the hollow cylindrical part (24) is capable of moving, said part (24) including an annular projection (40) defining a groove, into which is inserted an O-ring (42) of external diameter substantially equal to the internal diameter of the cylindrical chamber (20).

4. Reheating device as claimed in one of claims 1 to 3, ***characterized* in that** the reservoir, the plugging mechanism and the lever mechanism form a removable block.

5. Reheating device as claimed in one of claims 1 to 4, ***characterized* in that** the heating element (80) is constituted by a thin resistive film placed on the bottom of the reservoir (14).

6. Reheating device as claimed in one of claims 1 to 5, ***characterized* in that** it also includes a container (18) that can be snapped onto the structure or body (1) of said device and is capable of receiving one or more feeding bottles, so that they can be sterilized in a microwave oven.

## Patentansprüche

1. Aufwärmvorrichtung (10) für Nahrungsmittel oder Nahrungsmittelbestandteile für Kleinkinder, Folgendes aufweisend:
■ einen zur Aufnahme von Wasser geeigneten Behälter (14), der mit einem Heizelement (80) zum Erwärmen des Wassers, das er enthält, ausgestattet ist,
■ eine Fläschchenaufnahme (16), die unter dem Behälter (14) angeordnet ist, wobei der Behälter eine Öffnung (22) zum Durchlass von Wasser durch Schwerkraft in Richtung auf die Fläschchenaufnahme (16) umfasst,
■ einen Schließmechanismus (24, 38, 44) für die Öffnung, der durch einen Hebelmechanismus (52, 62) betätigt wird,
**dadurch gekennzeichnet, dass**
■ der Schließmechanismus umfasst:
• ein hohlzylindrisches Teil (24), das mit seitlichen Öffnungen (26) und einem Nippel (32) ausgestattet ist, der auf seiner Spitze angeordnet ist und eine Kehle (34) umfasst;
• eine Ringdichtung (36), die in der Kehle des Nippels angeordnet ist;
• eine Rückstellfeder (44), die am äußeren Umfang des hohlzylindrischen Teils (24) vorgesehen und dazu geeignet ist, die Ringdichtung (36) gegen die Oberfläche (38) der Öffnung (22) zu drücken, mit der der Behälter (14) ausgestattet ist, um diesen hermetisch zu verschließen;
■ wobei die Aufwärmvorrichtung einen am Körper (11) der Vorrichtung angelenkten Hebel (52) umfasst, der, wenn er betätigt wird, dazu geeignet ist, das hohlzylindrische Teil (24) zu verschieben, um die Öffnung (22) des Behälters (14) freizugeben und die Rückstellfeder (44) zusammenzudrücken.

2. Aufwärmvorrichtung nach Anspruch 1, **dadurch gekennzeichnet, dass** der Hebelmechanismus (52, 62) umfasst:
■ einen ersten Arm (52), der um eine fest mit dem Körper oder Gehäuse (11) verbundene Achse (54) angelenkt ist und im Bereich eines seiner Enden (55) durch den Benutzer betätigt werden kann, wobei der Arm (52) umfasst:
• an seinem anderen Ende (56) einen nach oben gerichteten Finger (58);
• eine Bohrung (60), die sich dazu eignet, den Durchlass des hohlzylindrischen Teils (24), wenn sich dieses verschiebt, zuzulassen;
■ einen zweiten Arm (62), der um eine fest mit dem Körper oder Gehäuse (11) verbundene und zur Drehachse (54) parallelen Achse (64) angelenkt ist, wovon eines der Enden (65) mit dem Finger (58) des ersten Arms (52) zusammenwirkt, und wovon das andere Ende (66) eine Gabel (68) bildet, die in einer Ringkehle (70) aufgenommen ist, die in einem im Wesentlichen unteren Bereich des hohlzylindrischen Teils (24) angeordnet ist.

3. Aufwärmvorrichtung nach einem der Ansprüche 1 und 2, **dadurch gekennzeichnet, dass** der Schließmechanismus außerdem eine zylindrische Kammer (20) umfasst, in der sich das hohlzylindrische Teil (24) verlagern kann, wobei das Teil (24) einen ringförmigen Vorsprung (40) umfasst, der eine Kehle bildet, in die eine Ringdichtung (42) mit einem Außendurchmesser eingesetzt ist, der im Wesentlichen gleich dem Innendurchmesser der zylindrischen Kammer (20) ist.

4. Aufwärmvorrichtung nach einem der Ansprüche 1 bis 3, **dadurch gekennzeichnet, dass** der Behälter, der Schließmechanismus und der Hebelmechanismus eine abnehmbare Einheit bilden.

5. Aufwärmvorrichtung nach einem der Ansprüche 1 bis 4, **dadurch gekennzeichnet, dass** das Heizelement (80) aus einer Widerstandsdünnschicht besteht, die auf dem Boden des Behälters (14) vorgesehen ist.

6. Aufwärmvorrichtung nach einem der Ansprüche 1 bis 5, **dadurch gekennzeichnet, dass** sie auch einen Behälter (18) umfasst, der am Gehäuse oder Körper (11) der Vorrichtung einrastbar und dazu geeignet ist, ein oder mehrere Fläschchen im Hinblick auf seine/ihre Sterilisierung in einem Mikrowellenofen aufzunehmen.
